# EUROPÄISCHE PATENTANMELDUNG

(11) **EP 4 015 955 A1**
(43) Veröffentlichungstag der Anmeldung: **22.06.2022**
(21) Anmeldenummer: 21215187.2
(22) Anmeldetag: 16.12.2021
(51) Int. Cl.: F27B 9/26, F27B 17/00, B28B 11/24, E01C 5/04

(54) **VERFAHREN ZUR HERSTELLUNG EINES KLINKERS SOWIE VORRICHTUNG UND KLINKER**

(30) Priorität: 17.12.2020 DE 102020134028
(71) Anmelder: Girnghuber GmbH, 84163 Marklkofen (DE)
(72) Erfinder: Girnghuber, Claus, 84163 Marklkofen (DE)
(74) Vertreter: Louis Pöhlau Lohrentz

(57) **Zusammenfassung**

Beschrieben wird ein Verfahren zur Herstellung eines Klinkers (K), insbesondere Fassadenklinkers, Pflasterklinkers und/oder Verblendziegels.

Das Verfahren umfasst die folgenden Schritte:
a) Bereitstellen einer keramischen Rohstoffmischung
b) Extrudieren eines Endlosstrangs (E) mittels eines Extruders (11), wobei der Endlosstrang (E) die Querschnittsform des Klinkers (K) aufweist
c) Aufbringen eines Trennmittels (12a) mittels einer Trennmittelaufbringvorrichtung (12) auf die Kopffläche der Vorsprungausformung des Endlosstrangs (E)
d) Ablängen des Endlosstrangs (E) mittels eines Abschneiders (13), um einen Klinkerrohling (KR) zu bilden
e) Trocknen des Klinkerrohlings (KR) in einem Trockner (14)
f) Anordnen der Klinkerrohlinge (KR) auf einem Ofenwagen (15), wobei die Klinkerrohlinge (KR) nebeneinander und übereinander angeordnet werden, derart dass die mit Trennmittel versehene Kontaktfläche (KF) des Klinkerrohlings (KR) mit der zweiten seitlichen Stirnfläche (S2) eines benachbarten Klinkerrohlings (KR) in Kontakt steht
g) Brennen der Klinkerrohlinge (KR) in einem Brennofen (16), um Klinker (K) auszubilden.

## Beschreibung

Die Erfindung betrifft ein Verfahren zur Herstellung eines Klinkers, eine Vorrichtung zur Herstellung eines Klinkers sowie einen Klinker.

Es ist aus der Praxis bekannt Pflaster- und Fassadenklinker durch Strangpressen herzustellen. Dies erfolgt in dem zunächst ein Endlosstrang durch Extrusion eines keramischen Materials gebildet wird und anschließend durch Ablängen des Endlosstrangs Klinkerrohlinge gebildet werden. Diese sind nach dem Ablängen in der Regel noch verformbar und weisen einen hohen Wassergehalt auf. Um den Rohlingen die Feuchtigkeit zu entziehen, werden diese getrocknet. Anschließend werden die getrockneten Rohlinge in einem Ofen gebrannt. Hierfür werden die Rohlinge auf einem sogenannten Ofenwagen übereinander angeordnet. Es besteht dabei das Problem, dass diese beim Brennen bei Temperaturen bis zur Sinterung aneinanderkleben. Aus diesem Grund wird zwischen den getrockneten Rohlingen vor dem aufeinander Setzen auf dem Ofenwagen eine Sandschicht eingebracht.

Im Falle von Rohlingen für Klinker, die seitliche Vorsprünge als Verlegehilfen aufweisen, ergibt sich die Gefahr, dass beim Brennen die Rohlinge im Bereich der Verlegehilfen verkleben.

Der Erfindung liegt nun die Aufgabe zugrunde, ein verbessertes Verfahren anzugeben, welches ein Verkleben von mit Verlegehilfen versehenen Klinker verhindert.

Diese Aufgabe wird erfindungsgemäß von einem Verfahren zur Herstellung eines Klinkers mit den Merkmalen des Anspruchs 1 sowie einer Vorrichtung zur Herstellung eines Klinkers mit den Merkmalen des Anspruchs 11 und einem Klinker mit den Merkmalen des Anspruchs 15 gelöst.

Bei dem Verfahren gemäß Hauptanspruch 1 handelt es sich um ein Verfahren zur Herstellung eines Klinkers, insbesondere Fassadenklinkers, Pflasterklinkers und/oder Verblendziegels. Der Klinker weist eine Sichtfläche und eine der Sichtfläche gegenüberliegende Lagerfläche auf, wobei die Sichtfläche und die Lagerfläche über seitliche Stirnflächen verbunden sind. Eine erste seitliche Stirnfläche weist zumindest einen Vorsprung, insbesondere stegförmigen oder nasenförmigen Vorsprung, auf. Dieser zumindest eine Vorsprung weist zumindest eine Kontaktfläche auf, die beim Verlegen eines Klinkers mit einem benachbarten Klinker in Kontakt steht. Wesentlich bei dem Verfahren ist, dass die folgenden Schritte, insbesondere in der folgenden Reihenfolge durchgeführt werden:
a) Bereitstellen einer keramischen Rohstoffmischung
b) Extrudieren eines Endlosstrangs mittels eines Extruders, wobei der Endlosstrang die Querschnittsform des Klinkers aufweist, mit den Stirnflächen des Klinkers korrespondierenden Strangseiten, wobei eine obere Strangseite zumindest eine Vorsprungausformung mit einer Kopffläche aufweist und eine untere Strangseite als Auflagefläche ausgebildet ist
c) Aufbringen eines Trennmittels mittels einer Trennmittelaufbringvorrichtung auf die Kopffläche der zumindest einen Vorsprungausformung des Endlosstrangs
d) Ablängen des Endlosstrangs mittels eines Abschneiders, um einen Klinkerrohling zu bilden, wobei der Klinkerrohling entsprechend den Strangseiten des Endlosstrangs seitliche Stirnflächen aufweist und den durch den Abschneider gebildete Schnittflächen entsprechende Sichtfläche und Lagerfläche aufweist, wobei der Klinkerrohling eine erste seitliche Stirnfläche und eine der ersten seitlichen Stirnfläche gegenüberliegende zweite seitliche Stirnfläche aufweist, wobei die erste seitliche Stirnfläche des Klinkerrohlings zumindest einen Vorsprung aufweist, wobei der zumindest eine Vorsprung des Klinkerrohlings zumindest eine mit Trennmittel versehene Kontaktfläche aufweist
e) Trocknen des Klinkerrohlings in einem Trockner
f) Anordnen zwei oder mehrerer Klinkerrohlinge auf einem Ofenwagen, wobei die zwei oder mehreren Klinkerrohlinge nebeneinander und/oder
   übereinander angeordnet werden, sodass die zumindest eine Kontaktfläche des Klinkerrohlings mit der zweiten seitlichen Stirnfläche eines benachbarten Klinkerrohlings in Kontakt steht
g) Brennen der zwei oder mehreren Klinkerrohlinge in einem Brennofen, wobei der Ofenwagen durch den Brennofen gefördert wird, um aus den Klinkerrohlingen die Klinker auszubilden.

Bei diesem Verfahren ergibt sich der Vorteil, dass ein Verkleben der Klinkerrohlinge bzw. der Klinker beim Brennen vermieden wird. Dies wird dadurch ermöglicht, dass bereits direkt nach dem Extrudieren das Trennmittel auf die Kopffläche der Vorsprungausformung des Endlosstrangs aufgebracht wird. Das Trennmittel haftet auf dem noch weichen Material des Endlosstrangs und entsprechend auch auf den durch Ablängen gebildeten Klinkerrohlingen. Durch das nachfolgende Trocknen des Klinkerrohlings bildet sich eine Verbindung zwischen Klinkerrohling und dem Trennmittel aus, indem die Verbindung des auf dem Klinkerrohling bereits hafteten Trennmittel mit der Oberfläche verfestigt wird und somit die Gefahr eines Verklebens der Klinkerrohlinge beim Brennen weiter reduziert wird.

Die untere Strangseite des Endlosstrangs fungiert bei dem Verfahren als Auflagefläche. D.h. die untere Strangseite ist diejenige Fläche, auf der der Endlosstrang beispielsweise auf einer Fördereinrichtung aufliegt, um den Endlosstrang in Extrusionsrichtung fördern zu können.

In bevorzugten Ausführungen ist es vorgesehen, dass die Sichtfläche und die Lagerfläche des Klinkers auch vertauscht werden können, d.h. dass beim Verlegen des Klinkers auch die Lagerfläche als Sichtfläche fungieren kann und umgekehrt.

Bevorzugt ist vorgesehen, dass der Klinker und/oder der Klinkerrohling eine zweite seitliche Stirnfläche aufweist, die gegenüberliegend der ersten seitlichen Stirnfläche angeordnet ist, insbesondere wobei die zweite seitliche Stirnfläche im Wesentlichen eben ausgestaltet ist. Die zweite seitliche Stirnfläche korrespondiert dabei im Wesentlichen mit der unteren Strangseite des Endlosstrangs und wird durch das Ablängen im Schritt d) gebildet. Die zweite seitliche Strangseite kann dabei als Auflagefläche für den Klinkerrohling bei den weiteren Verfahrensschritten dienen. In bevorzugten Ausführungen kann es sein, dass die zweite seitliche Stirnfläche auch eine Nut oder eine Ausformung aufweist.

Es ist grundsätzlich auch möglich, dass der Klinker und/oder der Klinkerrohling eine oder mehrere weitere seitliche Stirnflächen mit weiteren Vorsprüngen aufweist, zum Beispiel eine dritte seitliche Stirnfläche oder eine vierte seitliche Stirnfläche.

Bevorzugt ist es vorgesehen, dass der zumindest eine Vorsprung und/oder der zumindest eine weitere Vorsprung und/oder die zumindest eine Vorsprungausformung eine Längserstreckung in Extrusionsrichtung aufweist.

Durch das Aufbringen des Trennmittels auf die Kopffläche der zumindest einen Vorsprungausformung kann die Menge des benötigten Trennmittels reduziert werden, was zugleich ressourcenschonend und umweltfreundlich ist. Vorzugsweise ist vorgesehen, dass die Kopffläche während des Herstellungsprozesses nach oben ausgerichtet ist und als ebene Fläche ausgebildet ist. Die Kopffläche des Endlosstrangs bildet nach dem Ablängen im Schritt d) die Kontaktfläche des Klinkerrohlings bzw. des Klinkers.

Bei bevorzugten Ausführungen des Verfahrens ist vorgesehen, dass nach dem Schritt c) und vor dem Schritt d) weiter folgender Schritt ausgeführt wird:
c1) Fixieren des Trennmittels mittels einer Fixiervorrichtung. Vorteilhafterweise hat sich gezeigt, dass dadurch das Trennmittel leicht auf dem noch weichen Material des Endlosstrangs aufgebracht werden kann und zugleich an dem weichen Material besser haftet als auf getrockneten bzw. hartem Material. Bei der Fixiervorrichtung kann es sich beispielsweise um eine Walze oder eine ähnliche Vorrichtung handeln. In vorteilhaften Ausführungen kann es sein, dass im Schritt c1) die Fixiervorrichtung die Kopffläche der Vorsprungausformung des Endlosstrangs walzt, insbesondere sodass die Kopffläche mittels Walzen geebnet wird.

Es kann vorgesehen sein, dass im Schritt c) als Trennmittel ein Material oder eine Kombination von Materialien verwendet wird, ausgewählt aus: Quarzsand, Kaolin, Feldspat und/oder Tonerdesuspension. Es kann vorgesehen sein, dass im Schritt c) als Trennmittel (12a) ein Material oder eine Kombination von Materialien verwendet wird, beispielsweise: Quarzsand, Kaolin, Feldspat und/oder Tonerdesuspension. Dabei kann das Trennmittel als Schüttgut mit einer Vielzahl gleich oder unterschiedlich großer Körner und/oder auch als Festkörper und/oder Flüssigkeit auf die Vorsprungausformung, insbesondere die Kopffläche, des Endlosstrangs aufgebracht werden.

Insbesondere kann vorgesehen sein, dass der Endlosstrang im Schritt c) und/oder der Klinkerrohling im Schritt d) eine Feuchtigkeit im Bereich von 10 % bis 30 %, insbesondere im Bereich von 15 % bis 25 % aufweist. Dadurch kann sichergestellt werden, dass der Endlosstrang durch Einwirkung natürlicher Größen seine Formgebung beibehält, aber durch mechanische Bearbeitung leicht verformbar ist. So kann beispielsweise das Ablängen im Schritt d) ohne großen Kraftaufwand erfolgen und es werden saubere Schnittflächen erzeugt. Die Schnittflächen bilden dann die Sichtfläche und die Lagerfläche des Klinkers. Auch auf das Aufbringen des Trennmittels im Schritt c) hat dies eine positive Wirkung, da dadurch das Trennmittel auf der Oberfläche des Endlosstrangs aufgrund der leichten Verformbarkeit besonders gut haftet, vorzugsweise im Sinne einer Verankerung.

Bei bevorzugten Ausführungen kann vorgesehen sein, dass während oder nach dem Schritt d) und vor dem Schritt e) weiter folgender Schritt ausgeführt wird:
h) mechanische Nachbearbeitung des zumindest einen Vorsprungs des Klinkerrohlings, wobei der zumindest eine Vorsprung des Klinkerrohlings gekürzt wird. Es kann auch sein, dass in dem Schritt h) der zumindest eine weitere Vorsprung gekürzt wird. Mit der mechanischen Nachbearbeitung wird ein stufenförmiger Versatz des Vorsprungs und des weiteren Vorsprungs zu der Sichtfläche und/oder der Lagerfläche gebildet. Durch diesen stufenförmigen Versatz sind die Vorsprünge nach dem Verlegen des Klinkers in einem Pflaster für den Betrachter nicht mehr sichtbar, da der stufenförmige Versatz mit einem Fugenmittel, beispielsweise Sand, aufgefüllt wird.

In bevorzugten Ausführungen kann es vorgesehen sein, dass im Schritt e) das Trocknen des Klinkerrohlings bei einer Temperatur im Bereich von bis zu 120°C, insbesondere sodass der Klinkerrohling nach dem Trocknen eine Restfeuchtigkeit in einem Bereich von 0 % bis 4 %, insbesondere von 0,5 % bis 1,5 %, aufweist. Durch das Trocknen des Klinkerrohlings im Schritt e) wird diesem Feuchtigkeit entzogen, sodass der Klinkerrohling nach dem Trocknen hart und nicht mehr verformbar ist. Dies ist insbesondere für das nachfolgende Anordnen zwei oder mehrerer Klinkerrohlinge auf einem Ofenwagen im Schritt f) von Vorteil, da die Klinkerrohlinge nun bei Berührung ihre Form beibehalten.

Bei bevorzugten Ausführungen kann vorgesehen sein, dass im Schritt e) der Klinkerrohling durch den Trockner gefördert wird, insbesondere können dabei mehrere Klinkerrohlinge nebeneinander und/oder übereinander angeordnet sein, vorzugsweise ohne einander zu berühren.

Bei bevorzugten Ausführungen kann vorgesehen sein, dass im Schritt g) das Brennen des Klinkerrohlings bei einer Temperatur im Bereich von 1050°C bis 1300°C durchgeführt wird, insbesondere sodass ein Sintervorgang einsetzt. Durch das Sintern wird der Klinker hart und weist eine hohe Beständigkeit gegenüber Umwelteinflüssen auf. Bevorzugt weist das Trennmittel eine Schmelztemperatur auf, die oberhalb der Sintertemperatur der keramischen Rohstoffmischung bzw. des Klinkers liegt. Dies gewährleistet, dass zwischen dem Trennmittel und dem Klinker beim Brennen keine Verbindung entsteht und verhindert das Verkleben von Ziegeln, die beim Brennen übereinandergestapelt sind.

Die der Erfindung zugrunde liegende Aufgabe wird, wie oben erwähnt, auch durch die Vorrichtung gemäß dem Hauptanspruch 11 gelöst. Bei dieser Vorrichtung gemäß Anspruch 11 handelt es sich um eine Vorrichtung zur Herstellung eines Klinkers, insbesondere eines Fassadenklinkers, Pflasterklinkers und/oder Verblendziegels. Der Klinker weist eine Sichtfläche und eine der Sichtfläche gegenüberliegende Lagerfläche auf. Die Sichtfläche und die Lagerfläche sind über seitliche Stirnflächen verbunden. Die zumindest eine erste seitliche Stirnfläche weist zumindest einen Vorsprung, insbesondere stegförmigen oder nasenförmigen Vorsprung, auf. Dieser zumindest eine Vorsprung weist zumindest eine Kontaktfläche auf, die beim Verlegen eines Klinkers mit einem benachbarten Klinker in Kontakt steht. Der Vorsprung bildet dabei eine Verlegehilfe des Klinkers. Wesentlich bei der Vorrichtung ist, dass die Vorrichtung zumindest einen Extruder aufweist, der eine keramische Rohstoffmischung zur Ausbildung eines Endlosstrangs durch ein Mundstück presst. Der Endlosstrang weist daher die Querschnittsform des Klinkers auf, mit den Stirnflächen des Klinkers korrespondierenden Strangseiten, wobei eine obere Strangseite zumindest eine Vorsprungausformung mit einer Kopffläche aufweist und eine untere Strangseite als Auflagefläche ausgebildet ist. Die Vorrichtung weist zumindest eine Trennmittelaufbringvorrichtung auf, die ein Trennmittel auf die Kopffläche der zumindest einen Vorsprungausformung des Endlosstrangs aufbringt. Die Vorrichtung weist zumindest einen Abschneider auf, welcher den Endlosstrang ablängt, um somit einen Klinkerrohling zu bilden. Der Klinkerrohling weist den Strangseiten des Endlosstrangs entsprechende seitliche Stirnflächen und den durch den Abschneider gebildeten Schnittflächen entsprechende Sichtflächen und Lagerflächen auf. Der Klinkerrohling weist eine erste seitliche Stirnfläche und eine der ersten seitlichen Stirnfläche des Klinkerrohlings gegenüberliegende zweite seitliche Stirnfläche auf, wobei die erste seitliche Stirnfläche des Klinkerrohlings zumindest einen Vorsprung aufweist. Der zumindest eine Vorsprung des Klinkerrohlings weist zumindest eine mit Trennmittel versehene Kontaktfläche auf. Die Vorrichtung weist zumindest einen Trockner zum Trocknen der Klinkerrohlinge auf.

Die Vorrichtung weist zumindest einen Brennofen auf. Der Brennofen brennt den Klinkerrohling, um somit einen Klinker zu bilden. Wesentlich dabei ist, dass der Brennofen einen Ofenwagen umfasst, welcher durch den Brennofen gefördert wird, wobei auf dem Ofenwagen zwei oder mehrere Klinkerrohlinge nebeneinander und/oder übereinander angeordnet sind, sodass die zumindest eine Kontaktfläche des Klinkerrohlings mit der zweiten seitlichen Stirnfläche eines benachbarten Klinkerrohlings in Kontakt steht.

Bei dieser Vorrichtung gemäß Anspruch 11 ergibt sich der Vorteil, dass ein Verkleben der Klinkerrohlinge bzw. der Klinker beim Brennen vermieden wird. Dadurch, dass die Trennmittelaufbringvorrichtung das Trennmittel bereits auf die Kopffläche der zumindest einen Vorsprungausformung des noch weichen Endlosstrangs aufbringt, kann eine sichere Verbindung des Trennmittels mit dem Endlosstrangs bzw. des Klinkerrohlings sichergestellt werden, sodass bis zum Brennen der Klinkerrohlinge genügend Trennmittel auf den Klinkerrohlingen verbleibt und die Klinkerrohlinge beim Brennen nicht verkleben. Zudem bietet diese Vorrichtung den weiteren Vorteil, dass der Herstellungsprozess besonders effizient und zugleich ressourcenschonend ist.

In bevorzugten Ausführungen ist es vorgesehen, dass die Trennmittelaufbringvorrichtung eine Rüttelrinne oder eine Besandungsvorrichtung oder eine andere Dosiervorrichtung umfasst, wobei deren Auslass, insbesondere in seiner Breite, im Wesentlichen mit der zumindest einen Vorsprungausformung, bevorzugt der Kopffläche, des Endlosstrangs, korrespondiert und wobei der Auslass derart angeordnet ist, dass die Trennmittelaufbringvorrichtung das Trennmittel lediglich auf der Kopffläche der zumindest einen Vorsprungausformung aufbringt. In der Regel ist es am Klinker nachweisbar, auf welchen Flächen des Klinkers zuvor ein Trennmittel aufgebracht wurde. Dies ist im Wesentlichen durch kleine Vertiefungen in der Oberfläche sichtbar. Durch das gezielte Aufbringen des Trennmittels auf die Kopffläche der zumindest einen Vorsprungausformung wird gewährleistet, dass auf den übrigen Flächen des Klinkers beim Brennen keine durch das Trennmittel hervorgerufenen Vertiefungen entstehen. Somit können qualitativ hochwertige Klinker hergestellt werden. Darüber hinaus ist dies besonders umweltfreundlich und der Materialeinsatz wird dadurch verringert.

In besonders bevorzugten Ausführungen ist vorgesehen, dass die Vorrichtung eine Fixiervorrichtung aufweist, die das aufgebrachte Trennmittel auf der zumindest einen Vorsprungausformung, insbesondere der Kopffläche, fixiert. Wie oben bereits dargelegt, sorgt die Fixiervorrichtung dafür, dass das Trennmittel zumindest teilweise in die Oberfläche eindringt und somit eine leichte Verbindung zwischen dem weichen Endlosstrang und dem Trennmittel entsteht. Insbesondere kann vorgesehen sein, dass die Fixiervorrichtung zumindest eine Walze umfasst. Bevorzugt ist es möglich, dass die Walze höhenverstellbar ist und somit die Eindringtiefe des Trennmittels in die Oberfläche des Endlosstrangs bzw. des Klinkerrohlings individuell eingestellt werden kann.

In weiteren vorteilhaften Ausführungen ist vorgesehen, dass die Vorrichtung eine Nachbearbeitungseinrichtung zum Kürzen des zumindest einen Vorsprungs des Klinkerrohlings, vorzugsweise in dem Abschneider realisiert, aufweist. Es kann auch möglich sein, dass die Nachbearbeitungseinrichtung den zumindest einen weiteren Vorsprung kürzt. Als besonders vorteilhaft hat sich herausgestellt, wenn das Kürzen des Vorsprungs bzw. des weiteren Vorsprungs während des Ablängen des Endlosstrangs stattfindet. Dadurch kann die Produktivität bei der Herstellung gesteigert werden.

Bevorzugt ist es auch möglich, dass der Klinkerrohling im Trockner bei einer Temperatur im Bereich von bis zu 120°C, getrocknet wird, insbesondere sodass der Klinkerrohling nach dem Trocknen eine Restfeuchtigkeit in einem Bereich von 0 % bis 4 %, insbesondere von 0,5 % bis 1,5 %, aufweist.

Gemäß dem Anspruch 15 ist ein Klinker vorgesehen, wobei der Klinker eine Sichtfläche und eine der Sichtfläche gegenüberliegende Lagerfläche aufweist und die Sichtfläche und die Lagerfläche über seitliche Stirnflächen verbunden sind. Die eine erste seitliche Stirnfläche weist zumindest einen Vorsprung, insbesondere stegförmigen oder nasenförmigen Vorsprung, auf. Der zumindest eine Vorsprung weist zumindest eine Kontaktfläche auf, die beim Verlegen des Klinkers mit einem benachbarten Klinker in Kontakt steht. Wesentlich dabei ist, dass die zumindest eine Kontaktfläche des zumindest einen Vorsprungs mit Trennmittel versehen ist.

Bei dem Klinker gemäß Anspruch 15 kann es sich um einen Klinker handeln, bei dem das vorzugsweise körnige Trennmittel bereits bei der vorzugsweise über Strangpressen erfolgenden Herstellung des Klinkerrohlings in den Körper des noch weichen und verformbaren Klinkerrohlings oder Endlosstrangs aufgebracht bzw. eingebracht worden ist. Dadurch, dass sich das Trennmittel mit der keramischen Rohstoffmischung verbindet, wird in dem mit Trennmittel versehenen Bereich eine Oberfläche erhalten, die als Kontaktfläche mit im Brennofen angrenzend angeordneten Klinkern bzw. Klinkerrohlingen ein Verkleben der Klinker bzw. Klinkerrohlinge beim Brennen verhindert.

Je nach Materialien und Verfahrensbedingungen sind auch Ausführungen möglich, bei denen das Trennmittel nach dem Brennen von der Kontaktfläche zumindest weitgehend selbsttätig abfällt oder entfernbar ist. Es kann vorgesehen sein, dass die betreffende Kontaktfläche des Vorsprungs eine strukturierte Oberfläche aufweist, die im Wesentlichen eine Negativform des vor dem Brennen aufgebrachten Trennmittels umfasst, wobei die Negativform als Vertiefungen in der Oberfläche sichtbar ist. Hierbei ergibt sich der Vorteil, dass die strukturierte Oberfläche, hervorgerufen durch das Trennmittel beim Brennen, nur an dem zumindest einen Vorsprung bzw. der Kontaktfläche sichtbar ist. Die übrigen Flächen des Klinkers weisen diese spezielle strukturierte Oberfläche nicht auf. Insbesondere die Sichtfläche, welche nach dem Verlegen des Klinkers im Pflaster sichtbar ist, weist somit keine optischen Mängel auf, die durch ein Trennmittel beim Brennen hervorgerufen werden.

Bei besonders bevorzugten Ausführungen kann vorgesehen sein, dass das Trennmittel in den Körper des Klinkers im Oberflächenbereich der Kontaktfläche eingebracht ist, vorzugsweise indem das Trennmittel formschlüssig und/oder stoffschlüssig, und/oder zumindest abschnittsweise versenkt eingebracht ist. Hierdurch wird sichergestellt, dass das Trennmittel bereits vor dem Brennen des Klinkers ausreichend mit der keramischen Rohstoffmischung des Klinkerrohlings verbunden ist und in entsprechender Weise auch nach dem Brennen im Klinker verankert ist. "Zumindest abschnittsweise versenkt" bedeutet dabei, dass ein Teil des Trennmittels bei seitlicher Betrachtung aus der Kontaktfläche herausragt und ein anderer Teil des Trennmittels in der Kontaktfläche versenkt oder versunken bzw. eingebettet ist. Es kann auch vorgesehen sein, dass das Trennmittel, z.B. einzelne Körner vollständig im Oberflächenbereich der Kontaktfläche eingebracht ist bzw. sind.

Bei bevorzugten Ausführungen des Klinkers handelt es sich um einen Klinker, bei deren Herstellung über einen Klinkerrohling aus einem Endlosstrang eines Strangpressens vorgesehen ist, dass das Trennmittel bei der Herstellung des Klinkers:
(i) aufgebracht wird auf dem Endlosstrang nach dem Extrudieren und vor dem Ablängen des Endlosstrangs
   und/oder
(ii) aufgebracht wird auf den verformbaren und/oder weichen Klinkerrohling nach dem Ablängen des Endlosstrangs.

In bevorzugten Ausführungen ist vorgesehen, dass im Fall (i) der Endlosstrang verformbar und/oder weich ist. Dies hat den Vorteil, dass das Trennmittel leicht in die Oberfläche des Endlosstrangs eingearbeitet werden kann und so eine Verbindung zwischen Trennmittel und keramischer Rohstoffmischung entsteht.

In bevorzugten Ausführungen kann vorgesehen sein, dass im Fall (ii) das Trennmittel vor dem Trocknen des Klinkerrohlings aufgebracht ist. Dadurch wird sichergestellt, dass der Klinkerrohling noch weich und verformbar ist, sodass sich das Trennmittel mit der keramischen Rohstoffmischung verbinden kann.

Es kann vorgesehen sein, dass die zumindest eine Kontaktfläche des zumindest einen Vorsprungs eine strukturierte Oberfläche aufweist, die im Wesentlichen eine Negativform des vor dem Brennen aufgebrachten Trennmittels umfasst, wobei die Negativform als Vertiefungen in der Oberfläche sichtbar ist

Bei bevorzugten Ausführungen des Klinkers ist vorgesehen, dass die zumindest eine Kontaktfläche des zumindest einen Vorsprungs als ebene Fläche ausgebildet ist.

Weiter ist es möglich, dass der Klinker die strukturierte Oberfläche in einem Bereich, in dem das Trennmittel vor dem Brennen auf dem Klinker aufgebracht war, umfasst. Es ist auch bevorzugt möglich, dass der Klinker die strukturierte Oberfläche in einem weiteren Bereich, in dem das Trennmittel vor dem Brennen auf dem Klinker nicht aufgebracht war, nicht umfasst.

Bevorzugst ist es vorgesehen, dass der Klinker eine zweite seitliche Stirnfläche aufweist, die gegenüberliegend der ersten seitlichen Stirnfläche angeordnet ist, insbesondere wobei die zweite seitliche Stirnfläche im Wesentlichen eben ausgestaltet ist.

Es kann auch vorgesehen sein, dass der Klinker eine dritte seitliche Stirnfläche und eine vierte seitliche Stirnfläche aufweist, wobei die dritte seitliche Stirnfläche und/oder die vierte seitliche Stirnfläche zumindest einen weiteren Vorsprung aufweist.

In bevorzugten Ausführungen kann es möglich sein, dass der Klinker nur eine seitliche Stirnfläche mit Trennmittel versehenen Vorsprüngen aufweist. Insbesondere ist dies die erste seitliche Stirnfläche. Dies bedeutet, dass beispielsweise die dritte und vierte seitliche Stirnfläche, welche weitere Vorsprünge aufweisen können, nicht mit einem Trennmittel versehene Vorsprünge aufweisen.

Weitere Merkmale und Vorteile werden in Verbindung mit den Figuren beschrieben. Die Figuren zeigen:
- Fig. 1a, 1b:: schematische Darstellungen einer Vorrichtung zur Herstellung eines Klinkers
- Fig. 2a:: eine perspektivische Darstellung eines ersten Ausführungsbeispiels eines Klinkerrohlings
- Fig. 2b:: eine Draufsicht des Klinkerrohlings in Fig. 2a
- Fig. 2c:: eine Draufsicht eines zweiten Ausführungsbeispiels eines Klinkerrohlings
- Fig. 3:: eine schematische Seitenansicht eines mit Klinkerrohlingen beladenen Ofenwagens
- Fig. 4:: eine Darstellung eines Setzschemas mehrerer Klinkerrohlinge auf einem Ofenwagen zum Brennen in einem Brennofen
- Fig. 5:: ein Blockschaltbild eines Verfahrens zur Herstellung eines Klinkers

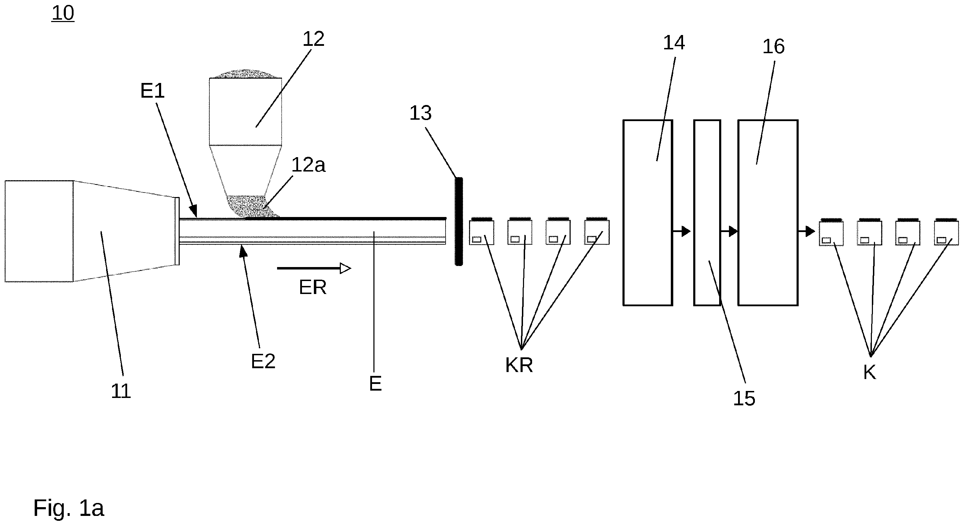

Fig. 1a zeigt eine schematische Darstellung einer Vorrichtung 10 zur Herstellung eines Klinkerrohlings KR.

Die Vorrichtung 10 umfasst einen Extruder 11, der eine keramische Rohstoffmischung durch ein Mundstück oder eine Düse zu einem Endlosstrang E presst. Die Formgebung des Mundstücks oder der Düse entspricht dabei der Querschnittsfläche des Klinkerrohlings KR. Der Endlosstrang E weist eine obere Strangseite E1 und eine der oberen Strangseite gegenüberliegenden unteren Strangseite E2 auf. Die untere Strangseite E2 dient dabei als Auflagefläche des Endlosstrangs E für eine nicht dargestellte Fördereinrichtung, die den Endlosstrang E in einer Extrusionsrichtung ER fördert. Die obere Strangseite E1 weist eine Vorsprungausformung mit einer Kopffläche auf. Die Vorsprungausformung erstreckt sich dabei in Extrusionsrichtung ER über die gesamte Länge des Endlosstrangs E.

Die Vorrichtung 10 umfasst weiter einen Abschneider 13, der den Endlosstrang E ablängt, um somit Klinkerrohlinge KR bereitzustellen.

Zwischen dem Extruder 11 und dem Abschneider 13 ist eine Trennmittelaufbringvorrichtung 12 geschaltet, mittels der Trennmittel 12a gezielt auf die Kopffläche der Vorsprungausformung aufgetragen wird.

Weiter umfasst die Vorrichtung 10 einen Trockner 14, in dem die Klinkerrohlinge KR getrocknet werden.

Die Vorrichtung 10 umfasst zudem einen Brennofen 16 mit einem Ofenwagen 15, auf dem die Klinkerrohlinge KR angeordnet werden und durch den Brennofen 16 gefördert werden. Nach dem Brennen der Klinkerrohlinge KR erhält man somit Klinker K.

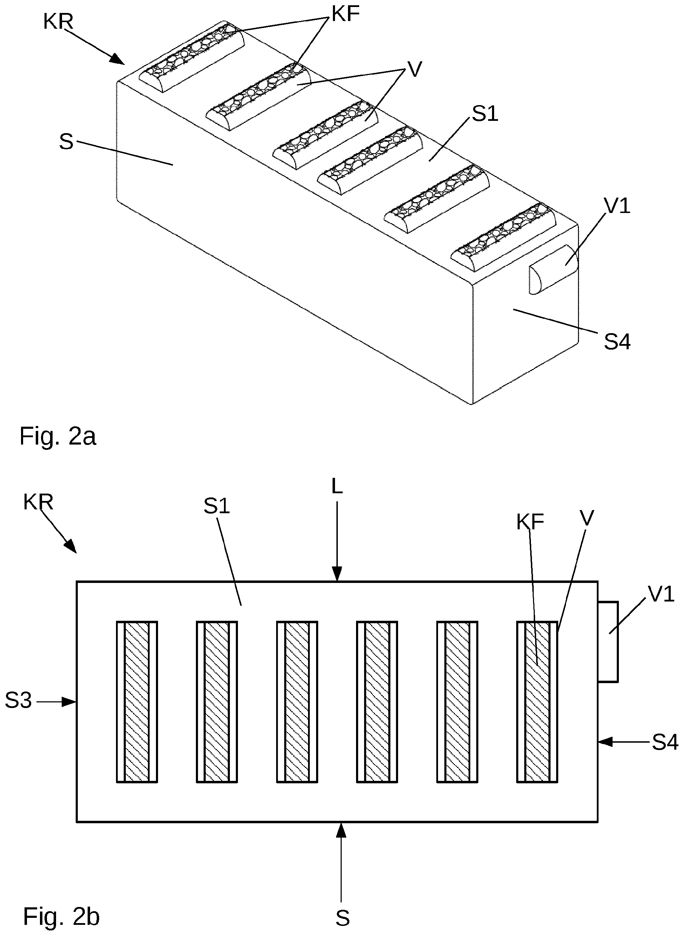

Der Klinkerrohling KR, wie er nach dem Ablängen mittels des Abschneiders 13 erhalten wird, ist in einer perspektivischen Darstellung in Fig. 2a gezeigt. Der Klinkerrohling KR ist als quaderförmiger Körper ausgebildet und weist eine Sichtfläche S und eine der Sichtfläche S gegenüberliegend angeordnete Lagerfläche L auf. Die Sichtfläche S und die Lagerfläche L sind ebene Flächen, bei denen es sich um Schnittflächen handelt, die beim Ablängen des Endlosstrangs E mittels des Abschneiders 13 gebildet werden. Die Sichtfläche S und die Lagerfläche L sind über seitliche Stirnflächen S1, S2, S3, S4 verbunden.

An der Stirnfläche S1 sind bei dem dargestellten Ausführungsbeispiel sechs längliche Vorsprünge V ausgebildet, die von der ebenen Stirnfläche S1 vorstehen. Die Vorsprünge V weisen jeweils eine Kontaktfläche KF auf, die, wie mit dem Muster dargestellt, mit körnigem Trennmittel 12a versehen sind. Die Vorsprünge V entsprechen den Vorsprungausformungen des Endlosstrangs E. Die Vorsprünge V sind in dem dargestellten Fall nasenförmig ausgestaltet, d.h. dass sich die Vorsprünge V nicht über die gesamte Höhenerstreckung des Klinkerrohlings KR zwischen der Sichtfläche S und der Lagerfläche L erstrecken. Die Vorsprünge V sind an ihren beiden Enden so gekürzt, dass ein stufenförmiger Versatz gegenüber der Sichtfläche S und der Lagerfläche L gebildet wird. Dies hat den Vorteil, dass die Vorsprünge V im verlegten Zustand im Pflaster nicht mehr sichtbar sind. Üblicherweise werden nach dem Verlegen der Klinker K die Fugen mit Sand oder einem speziellen Fugenmittel aufgefüllt, wodurch die Vorsprünge V bei senkrechter Betrachtung auf die Sichtfläche S nicht mehr sichtbar sind, da diese von dem Sand oder dem Fugenmittel überdeckt sind. Die Vorsprünge V sind im dargestellten Fall über die Stirnfläche S1 symmetrisch verteilt.

Bei abgewandelten Ausführungen können an den seitlichen Stirnflächen S3, S4 weitere Vorsprünge V1 ausgebildet sein. Diese sind im Unterschied zu den Vorsprüngen V nicht mit Trennmittel 12a versehen.

Bei dem ersten Ausführungsbeispiel der Fig. 2a, 2b sind, wie aus der Draufsicht in Fig. 2b zu erkennen ist, gegenüberliegende Stirnflächen S3 und S4 als ebenen Flächen ausgebildet, wobei an der seitlichen Stirnfläche S4 noch ein Vorsprung V1 ausgebildet ist. Der weitere Vorsprung V1 erstreckt sich nur in der ersten Hälfte der Höhenerstreckung des Klinkerrohlings KR, und zwar nur von der Lagerfläche L bis zur Mitte der Höhenerstreckung des Klinkerrohlings KR. Auch der weitere Vorsprung V1 ist zur Lagerfläche L hin so gekürzt, dass ein stufenförmiger Versatz gegenüber der Lagerfläche L ausgebildet ist. Der weitere Vorsprung V1 erstreckt sich zudem auch nicht ganz bis zur Mitte der Höhenerstreckung, sodass der weitere Vorsprung V1 der seitlichen Stirnfläche S4 auch bezüglich der Mitte der Höhenerstreckung einen Versatz hat. Die Beschreibung der Formgebung des Klinkerrohlings KR, wie in Fig. 2a bis 2c gezeigt, gilt dabei auch für den Klinker K, welcher durch Brennen des Klinkerrohlings KR erzeugt wird.

Bei gegenüber den Figuren 2a und 2b abgewandelten Ausführungen, kann vorgesehen sein, dass die Vorsprünge V und auch die weiteren Vorsprünge V1 stegförmig ausgebildet sind. Dies bedeutet, dass sich die Vorsprünge V und/oder die weiteren Vorsprünge V1 über die gesamte Höhenerstreckung zwischen der Sichtfläche S und der Lagerfläche L erstrecken.

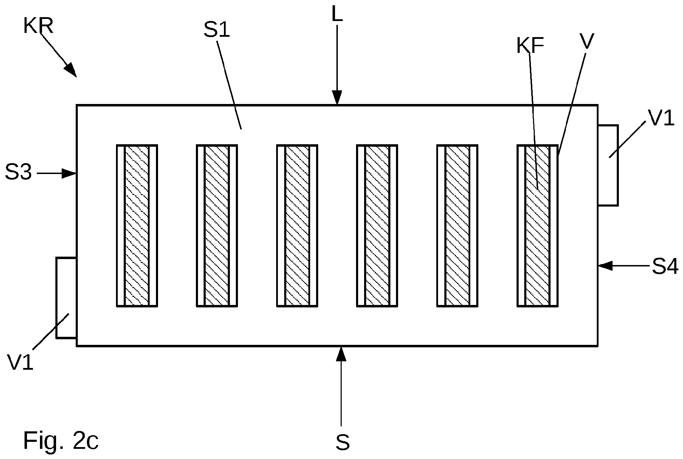

Das in Fig. 2c dargestellte zweite Ausführungsbeispiel entspricht im Wesentlichen dem Klinkerrohling KR des ersten Ausführungsbeispiel, wie in Fig. 2a und 2b gezeigt, jedoch mit dem Unterschied, dass die seitliche Stirnfläche S3 nun auch einen weiteren Vorsprung V1 aufweist. Der weitere Vorsprung V1 der seitlichen Stirnfläche S3 erstreckt sich jedoch nur in der zweiten Hälfte der Höhenerstreckung des Klinkerrohlings KR, und zwar nur von der Sichtfläche S bis zur Mitte der Höhenerstreckung des Klinkerrohlings KR. Der weitere Vorsprung V1 der Stirnfläche S3 ist zur Sichtfläche S und zur Mitte der Höhenerstreckung gekürzt, sodass ebenfalls ein stufenförmiger Versatz zur Sichtfläche S und zur Mitte der Höhenerstreckung des Klinkerrohlings KR ausgebildet ist.

Die Vorsprünge V und auch die weiteren Vorsprünge V1 können in beliebigen Formen ausgestaltet sein. Wie in Fig. 2a gezeigt, ist der weitere Vorsprung V1 in seinem Querschnitt halbrund ausgestaltet. Die Vorsprünge V hingegen weisen jeweils eine ebene Kontaktfläche KF auf, die mit dem Trennmittel 12a versehen ist. Die Vorsprünge V sind in ihrem Querschnitt daher im Wesentlichen halbrund und dabei im Bereich der Kontaktfläche KF abgeflacht. In einer bevorzugten abgewandelten Ausführung können die Vorsprünge V und die weiteren Vorsprünge V1 auch quaderförmig ausgestaltet sein.

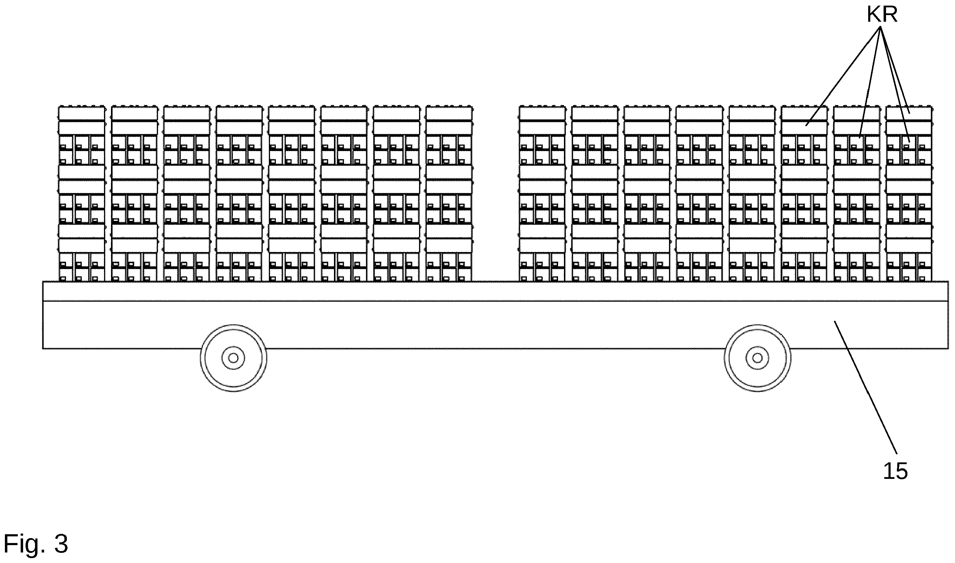

Um das Brennen der Klinkerrohlinge KR in dem Brennofen 16 effizienter zu gestalten, werden mehrere Klinkerrohlinge KR zumeist auf einem Ofenwagen 15 nebeneinander und übereinander angeordnet, sodass mehrere Klinkerrohlinge KR gleichzeitig gebrannt werden können. Dabei werden die Klinkerrohlinge KR mit ihrer seitlichen Stirnfläche S2, welche gegenüberliegend der ersten seitlichen Stirnfläche S1 angeordnet ist, auf den Kontaktflächen KF der darunterliegenden Klinkerrohlinge KR angeordnet. Eine derartige Anordnung der Klinkerrohlinge KR auf einem Ofenwagen 15 ist in der Fig. 3 exemplarisch dargestellt. Das Anordnen der Klinkerrohlinge KR auf dem Ofenwagen 15 wird auch als "Setzen" bezeichnet.

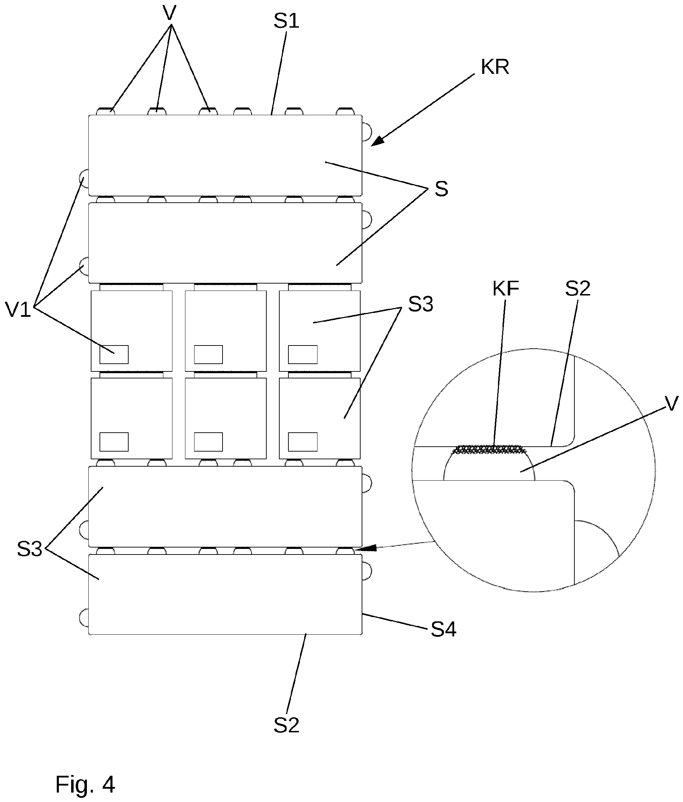

Fig. 4 zeigt das sogenannte Setzschema der Klinkerrohlinge KR auf dem Ofenwagen 15 in einer detaillierten Darstellung. Dabei sind sechs Reihen von Klinkerrohlingen KR übereinander angeordnet und jeweils drei Klinkerrohlinge KR pro Reihe nebeneinander angeordnet. In den beiden unteren Reihen sind die Klinkerrohlinge KR deckungsgleich übereinander angeordnet. In den mittleren beiden Reihen sind die Klinkerrohlinge KR ebenfalls deckungsgleich übereinander angeordnet, jedoch um 90° zu den beiden unteren Reihen versetzt. Dies erhöht die Stabilität der übereinander angeordneten Klinkerrohlinge KR und ermöglicht es zudem mehrere Klinkerrohlinge KR übereinander anzuordnen. Es kann auch sein, dass jede Reihe um 90° zu der darunter bzw. darüber liegenden Reihe versetzt angeordnet ist. Die Stirnfläche S2 ist dabei stets nach unten gerichtet und bildet somit die Auflagefläche, auf dem der Klinkerrohling KR auf dem Ofenwagen 15 oder der Kontaktfläche KF eines anderen Klinkerrohlings KR aufliegt.

Damit ein Verkleben der Klinkerrohlinge KR beim Brennen in dem Brennofen 16 vermieden wird, ist auf den Kontaktflächen KF der Klinkerrohlinge KR das Trennmittel 12a aufgebracht. Das Aufbringen des Trennmittels 12a erfolgt mittels einer Trennmittelaufbringvorrichtung 12, wie in Fig. 1a gezeigt. Dabei wird das Trennmittel 12a auf die Kopffläche der Vorsprungausformung des Endlosstrangs E aufgebracht. Als Trennmittel 12a kann beispielsweise Quarzsand, Feldspat, Kaolin oder eine Tonerdesuspension verwendet werden. Dabei kann das Trennmittel 12a als Schüttgut mit einer Vielzahl unterschiedlich großer Körner und/oder auch als Festkörper und/oder Flüssigkeit ausgestaltet sein.

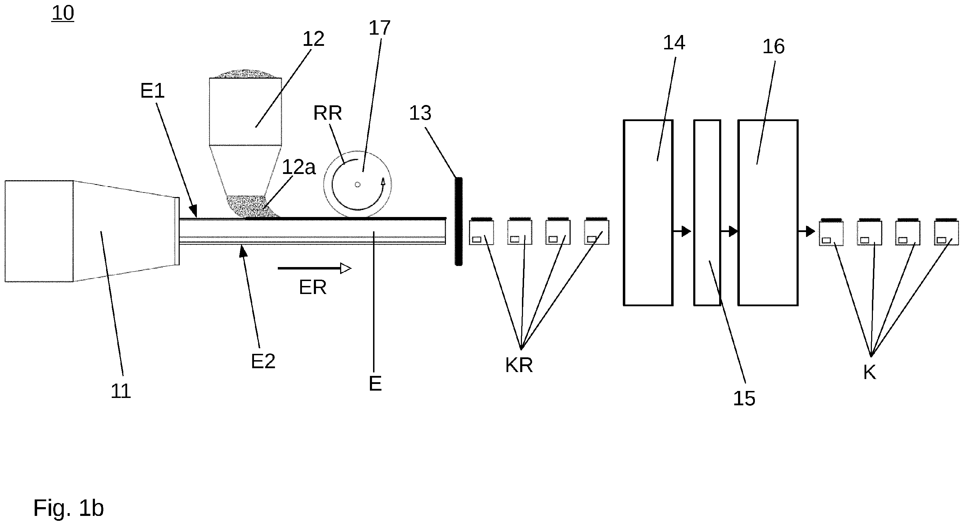

In Fig. 1b ist eine weitere Ausführung einer Vorrichtung 10 gezeigt. Diese entspricht im Wesentlichen der in Fig. 1a gezeigten Vorrichtung 10, jedoch mit dem Unterschied, dass diese Vorrichtung 10 eine Fixiervorrichtung 17 aufweist. Die Fixiervorrichtung 17 sorgt dafür, dass das Trennmittel 12a zumindest teilweise in die Oberfläche des Endlosstrangs E eindringt. In dieser Ausgestaltungsvariante ist die Fixiervorrichtung 17 als eine Walze ausgestaltet. Die Rotationsrichtung RR der Walze entspricht dabei der Extrusionsrichtung ER des Endlosstrangs E, wie dies in Fig. 1b durch die Richtungspfeile dargestellt ist. Man spricht in diesem Fall von einem Gleichlauf. Bei einem Gleichlauf von Fixiervorrichtung 17 und Endlosstrang E kann das Trennmittel 12a besonders sanft und vor allem ohne große Verformung des Endlosstrangs E erfolgen. Dies ist dadurch begründet, dass bei einem Gleichlauf geringere Kräfte als bei einem Gegenlauf wirken. Als besonders vorteilhaft hat sich gezeigt, wenn die Rotationsgeschwindigkeit der Walze im Angriffspunkt identisch mit der Extrusionsgeschwindigkeit ist. Als Angriffspunkt ist dabei derjenige Punkt zu verstehen, an dem die Walze den Endlosstrang E berührt. Durch diese Maßnahmen wird ein möglichst gleichmäßiges und sanftes Fixieren des Trennmittels 12a ermöglicht.

Die Walze kann beim Fixiervorgang auch eine Abplattung der Kopffläche der Vorsprungausformung bewirken. In einer Ausführungsvariante kann die Höhe der Walze bezogen zum Endlosstrang E eingestellt werden und somit die Eindringtiefe des Trennmittels 12a in die Oberfläche des Endlosstrangs E beeinflusst werden.

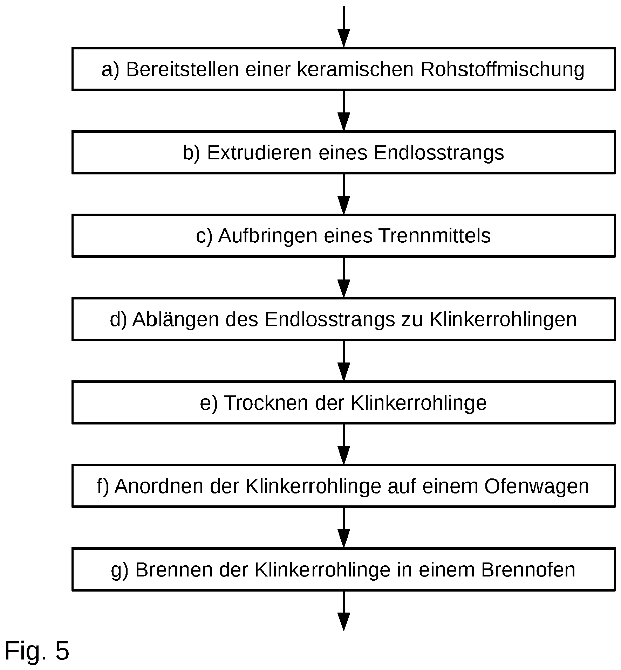

Fig. 5 zeigt ein Blockschaltbild eines Verfahrens zur Herstellung eines Klinkers K. Bei dem Verfahren wird zunächst im Schritt a) eine keramische Rohstoffmischung bereitgestellt, die im Schritt b) mittels eines Extruders 11 zu einem Endlosstrang E gepresst wird. Anschließend wird im Schritt c) ein Trennmittel 12a auf die Kopffläche des Endlosstrangs E mittels einer Trennmittelaufbringvorrichtung 12 aufgebracht. Im Schritt d) wird der Endlosstrang E mittels eines Abschneiders 13 abgelängt, um so einen Klinkerrohling KR zu bilden. Nachfolgend wird der Klinkerrohling KR im Schritt e) mittels eines Trockners 14 getrocknet. Beim Trocknen wird dem Klinkerrohling KR die Feuchtigkeit entzogen, sodass der Klinkerrohling KR hart und nicht mehr verformbar ist. Im Schritt f) werden mehrere Klinkerrohlinge KR auf einem Ofenwagen 15 nebeneinander und übereinander, wie in Fig. 3 gezeigt, angeordnet. Das Anordnen kann dabei händisch oder maschinell, beispielsweise mittels eines Roboters, erfolgen. Anschließend werden die Klinkerrohlinge KR in einem Brennofen 16 gebrannt, um Klinker K zu bilden. Bei dem Brennofen 16 kann es sich beispielsweise um einen Ringofen oder einen Tunnelofen handeln. Die Klinker K können nachfolgend händisch oder maschinell konfektioniert und/oder verpackt werden.

In einem Ausführungsbeispiel kann es möglich sein, dass nach dem Aufbringen des Trennmittels 12a im Schritt c) das Trennmittel 12a mittels einer Fixiervorrichtung 17 fixiert wird. Bei dem Fixieren kann das Trennmittel 12a zumindest teilweise in die Oberfläche des Endlosstrangs E eindringen. Da der Endlosstrang E noch weich und verformbar ist, erfolgt dies ohne großen Kraftaufwand. Mit teilweise in die Oberfläche eindringen ist dabei gemeint, dass das Trennmittel 12a zwar in der Oberfläche bzw. der Kopffläche des Endlosstrangs E verankert wird, jedoch noch zu einem gewissen Teil aus der Oberfläche bzw. der Kopffläche herausragt. Dies gewährleistet, dass das Trennmittel 12a beispielsweise beim späteren Setzen der Klinker K auf den Ofenwagen 15 auf der Kontaktfläche KF haften bleibt und sich nicht durch Kippen oder Neigen der Klinkerrohlinge KR aufgrund der Gravitationskraft von der Kontaktfläche KF löst. Die Gefahr des Verklebens der Klinkerrohlinge KR beim Brennen wird dadurch reduziert.

In einem anderen Ausführungsbeispiel kann es möglich sein, dass während des Ablängen des Endlosstrangs E im Schritt d) zeitgleich eine mechanische Nachbearbeitung zum Kürzen der Vorsprünge V und/oder der weiteren Vorsprünge V1 stattfindet. Der Schritt der mechanischen Nachbearbeitung kann auch zeitversetzt zu dem Ablängen im Schritt d) ausgeführt werden. Durch die mechanische Nachbearbeitung werden die Vorsprünge V gekürzt, sodass ein stufenförmiger Versatz zur Lagerfläche L und/oder zur Sichtfläche S gebildet wird. Bei Klinkerrohlingen KR mit stegförmigen Vorsprüngen V kann auf die mechanische Nachbearbeitung verzichtet werden, da diese Vorsprünge V nicht gegenüber der Sichtfläche S und/oder der Lagerfläche L gekürzt sind.

### Bezugszeichenliste

- E: Endlosstrang
- E1: obere Strangseite
- E2: untere Strangseite
- ER: Extrusionsrichtung
- RR: Rotationsrichtung

- K: Klinker
- KF: Kontaktfläche
- KR: Klinkerrohling
- L: Lagerfläche
- S: Sichtfläche
- S1, S2, S3, S4: seitliche Stirnfläche
- V: Vorsprung
- V1: weiterer Vorsprung

- 10: Vorrichtung
- 11: Extruder
- 12: Trennmittelaufbringvorrichtung
- 12a: Trennmittel
- 13: Abschneider
- 14: Trockner
- 15: Ofenwagen
- 16: Brennofen
- 17: Fixiervorrichtung

## Patentansprüche

1. Verfahren zur Herstellung eines Klinkers (K), insbesondere Fassadenklinkers, Pflasterklinkers und/oder Verblendziegels,
wobei der Klinker (K) eine Sichtfläche (S) und eine der Sichtfläche (S) gegenüberliegende Lagerfläche (L) aufweist, wobei die Sichtfläche (S) und die Lagerfläche (L) über seitliche Stirnflächen (S1, S2, S3, S4) verbunden sind, und wobei eine erste seitliche Stirnfläche (S1) zumindest einen Vorsprung (V), insbesondere stegförmigen oder nasenförmigen Vorsprung (V), aufweist, wobei der zumindest eine Vorsprung (V) zumindest eine Kontaktfläche (KF) aufweist, die beim Verlegen eines Klinkers (K) mit einem benachbarten Klinker (K) in Kontakt steht, und wobei bei dem Verfahren die folgenden Schritte, insbesondere in der folgenden Reihenfolge, durchgeführt werden:
a) Bereitstellen einer keramischen Rohstoffmischung
b) Extrudieren eines Endlosstrangs (E) mittels eines Extruders (11), wobei der Endlosstrang (E) die Querschnittsform des Klinkers (K) aufweist, mit den Stirnflächen (S1, S2, S3, S4) des Klinkers (K) korrespondierenden Strangseiten, wobei eine obere Strangseite (E1) zumindest eine Vorsprungausformung mit einer Kopffläche aufweist und eine untere Strangseite (E2) als Auflagefläche ausgebildet ist
c) Aufbringen eines Trennmittels (12a) mittels einer Trennmittelaufbringvorrichtung (12) lediglich auf die Kopffläche der zumindest einen Vorsprungausformung des noch weichen Endlosstrangs (E)
d) Ablängen des Endlosstrangs (E) mittels eines Abschneiders (13), um einen Klinkerrohling (KR) zu bilden, wobei der Klinkerrohling (KR) entsprechend den Strangseiten des Endlosstrangs (E) seitliche Stirnflächen aufweist und den durch den Abschneider (13) gebildete Schnittflächen entsprechende Sichtfläche (S) und Lagerfläche (L) aufweist, wobei der Klinkerrohling (KR) eine erste seitliche Stirnfläche (S1) und eine der ersten seitlichen Stirnfläche (S1) gegenüberliegende zweite seitliche Stirnfläche (S2) aufweist, wobei die erste seitliche Stirnfläche (S1) des Klinkerrohlings (KR) zumindest einen Vorsprung (V) aufweist, wobei der zumindest eine Vorsprung (V) des Klinkerrohlings (KR) zumindest eine mit Trennmittel (12a) versehene Kontaktfläche (KF) aufweist
e) Trocknen des Klinkerrohlings (KR) in einem Trockner (14) wobei das Trocknen im Bereich von bis zu 120° C erfolgt, insbesondere so dass der Klinkerrohling (KR) nach dem Trocknen eine Restfeuchte in einem Bereich von 0 % bis 4 % aufweist.
f) Anordnen zwei oder mehrerer Klinkerrohlinge (KR) auf einem Ofenwagen (15), wobei die zwei oder mehreren Klinkerrohlinge (KR) nebeneinander und/oder übereinander angeordnet werden, sodass die zumindest eine Kontaktfläche (KF) des Klinkerrohlings (KR) mit der zweiten seitlichen Stirnfläche (S2) eines benachbarten Klinkerrohlings (KR) in Kontakt steht
g) Brennen der zwei oder mehreren Klinkerrohlinge (KR) in einem Brennofen (16), wobei der Ofenwagen (15) durch den Brennofen (16) gefördert wird, um aus den Klinkerrohlingen (KR) die Klinker (K) auszubilden.

2. Verfahren nach einem der vorhergehenden Ansprüche,
**dadurch gekennzeichnet,**
**dass** nach dem Schritt c) und vor dem Schritt d) weiter folgender Schritt ausgeführt wird:
c1) Fixieren des Trennmittels (12a) mittels einer Fixiervorrichtung (17).

3. Verfahren nach dem Anspruch 2,
**dadurch gekennzeichnet,**
**dass** im Schritt c1) die Fixiervorrichtung (17) die Kopffläche der Vorsprungausformung des Endlosstrangs (E) walzt, insbesondere sodass die Kopffläche mittels Walzen geebnet wird.

4. Verfahren nach einem der vorhergehenden Ansprüche,
**dadurch gekennzeichnet,**
**dass** im Schritt c) als Trennmittel (12a) ein Material oder eine Kombination von Materialien verwendet wird, ausgewählt aus: Quarzsand, Kaolin, Feldspat und/oder Tonerdesuspension.

5. Verfahren nach einem der vorhergehenden Ansprüche,
**dadurch gekennzeichnet,**
**dass** der Endlosstrang (E) im Schritt c) und/oder der Klinkerrohling (KR) im Schritt d) eine Feuchtigkeit im Bereich von 10 % bis 30 %, insbesondere im Bereich von 15 % bis 25 % aufweist.

6. Verfahren nach einem der vorhergehenden Ansprüche,
**dadurch gekennzeichnet,**
**dass** während oder nach dem Schritt d) und vor dem Schritt e) weiter folgender Schritt ausgeführt wird:
h) mechanische Nachbearbeitung des zumindest einen Vorsprungs (V) des Klinkerrohlings (KR), wobei der zumindest eine Vorsprung (V) des Klinkerrohlings (KR) gekürzt wird.

7. Verfahren nach einem der vorhergehenden Ansprüche,
**dadurch gekennzeichnet,**
**dass** im Schritt e) das Trocknen des Klinkerrohlings (KR) bei einer Temperatur im Bereich von bis zu 120°C, sodass der Klinkerrohling (KR) nach dem Trocknen eine Restfeuchtigkeit in einem Bereich von 0 % bis 4 %, insbesondere von 0,5 % bis 1,5 %, aufweist.

8. Verfahren nach einem der vorhergehenden Ansprüche,
**dadurch gekennzeichnet,**
**dass** im Schritt e) der Klinkerrohling (KR) durch den Trockner (14) gefördert wird, insbesondere wobei mehrere Klinkerrohlinge (KR) nebeneinander und/oder übereinander angeordnet sind, vorzugsweise ohne einander zu berühren.

9. Verfahren nach einem der vorhergehenden Ansprüche,
**dadurch gekennzeichnet,**
**dass** im Schritt e) jeweils die zweite Stirnfläche (S2) auf zumindest einer Kontaktfläche (KF) eines benachbarten und/oder darunterliegenden Klinkerrohlings (KR) angeordnet ist.

10. Verfahren nach einem der vorhergehenden Ansprüche,
**dadurch gekennzeichnet,**
**dass** im Schritt g) das Brennen des Klinkerrohlings (KR) bei einer Temperatur im Bereich von 1050°C bis 1300°C durchgeführt wird, insbesondere sodass ein Sintervorgang einsetzt.

11. Vorrichtung (10) zur Herstellung eines Klinkers (K), insbesondere mit einem Verfahren nach den Ansprüchen 1 bis 10,
wobei der Klinker (K) eine Sichtfläche (S) und eine der Sichtfläche (S) gegenüberliegende Lagerfläche (L) aufweist, wobei die Sichtfläche (S) und die Lagerfläche (L) über seitliche Stirnflächen (S1, S2, S3, S4) verbunden sind, und wobei zumindest eine erste seitliche Stirnfläche (S1) zumindest einen Vorsprung (V), insbesondere stegförmigen oder nasenförmigen Vorsprung (V), aufweist, wobei der zumindest eine Vorsprung (V) zumindest eine Kontaktfläche (KF) aufweist, die beim Verlegen eines Klinkers (K) mit einem benachbarten Klinker (K) in Kontakt steht,
und wobei die Vorrichtung (10) zumindest einen Extruder (11) aufweist, der eine keramische Rohstoffmischung zur Ausbildung eines Endlosstrangs (E) durch ein Mundstück presst, wobei der Endlosstrang (E) die Querschnittsform des Klinkers (K) aufweist, mit den Stirnflächen (S1, S2, S3, S4) des Klinkers (K) korrespondierenden Strangseiten, wobei eine obere Strangseite (E1) zumindest eine Vorsprungausformung mit einer Kopffläche aufweist und eine untere Strangseite (E2) als Auflagefläche ausgebildet ist, und wobei die Vorrichtung (10) zumindest eine Trennmittelaufbringvorrichtung (12) aufweist, die ein Trennmittel (12a) auf die Kopffläche der zumindest einen Vorsprungausformung des Endlosstrangs (E) aufbringt, wobei die Trennmittelaufbringvorrichtung (12) eine Rüttelrinne oder eine Besandungsvorrichtung oder eine andere Dosiervorrichtung umfasst, wobei deren Auslass in seiner Breite im Wesentlichen mit der Kopffläche der zumindest einen Vorsprungsausformung des Endlosstrangs (E) korrespondiert und wobei der Auslass derart angeordnet ist, dass die Trennmittelaufbringvorrichtung (12) das Trennmittel (12a) lediglich auf der Kopffläche der zumindest einen Vorsprungsausformung aufbringt,
und wobei die Vorrichtung (10) zumindest einen Abschneider (13) aufweist, welcher den Endlosstrang (E) ablängt, um somit einen Klinkerrohling (KR) zu bilden, wobei der Klinkerrohling (KR) entsprechend den Strangseiten des Endlosstrangs (E) seitliche Stirnflächen aufweist und den durch den Abschneider (13) gebildete Schnittflächen entsprechende Sichtfläche (S) und Lagerfläche (L) aufweist, wobei der Klinkerrohling (KR) eine erste seitliche Stirnfläche (S1) und eine der ersten seitlichen Stirnfläche (S1) gegenüberliegende zweite seitliche Stirnfläche (S2) aufweist, wobei die erste seitliche Stirnfläche (S1) des Klinkerrohlings (KR) zumindest einen Vorsprung (V) aufweist, wobei der zumindest eine Vorsprung (V) des Klinkerrohlings (KR) zumindest eine mit Trennmittel (12a) versehene Kontaktfläche (KF) aufweist,
und wobei die Vorrichtung (10) zumindest einen Trockner (14) zum Trocknen der Klinkerrohlinge (KR) aufweist,
und wobei die Vorrichtung (10) zumindest einen Brennofen (16) aufweist, welcher den Klinkerrohling (KR) brennt, um somit einen Klinker (K) zu bilden,
wobei vorgesehen ist,
dass der Brennofen (16) einen Ofenwagen (15) umfasst, welcher durch den Brennofen (16) gefördert wird, wobei auf dem Ofenwagen (15) zwei oder mehrere Klinkerrohlinge (KR) nebeneinander und/oder übereinander angeordnet sind, sodass die zumindest eine mit Trennmittel (12a) versehene Kontaktfläche (KF) des Klinkerrohlings (KR) mit der zweiten seitlichen Stirnfläche (S2) eines benachbarten Klinkerrohlings (KR) in Kontakt steht.

12. Vorrichtung nach Anspruch 11,
**dadurch gekennzeichnet,**
**dass** die Vorrichtung (10) eine Fixiervorrichtung (17) aufweist, um das aufgebrachte Trennmittel (12a) auf der zumindest einen Vorsprungausformung, insbesondere der Kopffläche, zu fixieren.

13. Vorrichtung nach Anspruch 12,
**dadurch gekennzeichnet,**
**dass** die Fixiervorrichtung (17) zumindest eine Walze umfasst. FB

14. Vorrichtung nach einem der Ansprüche 11 bis 13,
**dadurch gekennzeichnet,**
**dass** die Vorrichtung (10) eine Nachbearbeitungseinrichtung zum Kürzen des zumindest einen Vorsprungs (V) des Klinkerrohlings (KR), vorzugsweise in dem Abschneider (13) realisiert, aufweist.

15. Klinker, insbesondere hergestellt nach einem Verfahren nach den Ansprüchen 1 bis 10 und/oder mit einer Vorrichtung nach den Ansprüchen 11 bis 14,
wobei der Klinker (K) eine Sichtfläche (S) und eine der Sichtfläche (S) gegenüberliegende Lagerfläche (L) aufweist, wobei die Sichtfläche (S) und die Lagerfläche (L) über seitliche Stirnflächen (S1, S2, S3, S4) verbunden sind, und wobei eine erste seitliche Stirnfläche (S1) zumindest einen Vorsprung (V), insbesondere stegförmigen oder nasenförmigen Vorsprung (V), aufweist, wobei der zumindest eine Vorsprung (V) zumindest eine Kontaktfläche (KF) aufweist, die beim Verlegen des Klinkers (K) mit einem benachbarten Klinker (K) in Kontakt steht
**dadurch gekennzeichnet,**
**dass** die zumindest eine Kontaktfläche (KF) des zumindest einen Vorsprungs (V) mit Trennmittel (12a) versehen ist.

16. Klinker nach Anspruch 15,
**dadurch gekennzeichnet,**
**dass** das Trennmittel (12a) in den Körper des Klinkers (K) im Oberflächenbereich der Kontaktfläche (KF) eingebracht ist, vorzugsweise indem das Trennmittel (12a) formschlüssig und/oder stoffschlüssig, und/oder zumindest abschnittsweise versenkt eingebracht ist.
